# EUROPÄISCHE PATENTSCHRIFT

(11) **EP 2 098 414 B1**
(45) Veröffentlichungstag und Bekanntmachung des Hinweises auf die Patenterteilung: **22.09.2010**
(21) Anmeldenummer: 08004054.6
(22) Anmeldetag: 05.03.2008
(51) Int. Cl.: B60R 19/18

(54) **Energieabsorbierende Stoßfängeranordnung**
Energy absorbing bumper system
Agencement de pare-chocs absorbant l'énergie

(43) Veröffentlichungstag der Anmeldung: 09.09.2009
(73) Patentinhaber: Peguform GmbH, 79268 Bötzingen (DE)
(72) Erfinder: Rinderlin, Jürgen, 79279 Vörstetten (DE)
(74) Vertreter: Neunert, Peter Andreas

(56) Entgegenhaltungen:
- EP-A- 1 894 791
- DE-A1- 2 259 620
- DE-A1-102005 020 730
- FR-A- 2 741 413

## Beschreibung

Die vorliegende Erfindung betrifft eine Stoßfängeranordnung für Kraftfahrzeuge mit mindestens einem in einem Hohlraum zwischen einem mit relativ wenig Krafteinwirkung verformbaren Stoßfänger und einem Stoßfängerquerträger angeordneten energieabsorbierenden Element.

Energieabsorbierende Strukturen im Bereich der Stoßfängeranordnung werden immer mehr dazu eingesetzt, um den Fußgängerschutz zu verbessern. Dazu werden üblicherweise in dem Hohlraum zwischen dem meist schalenförmig aufgebauten Stoßfänger und dem Stoßfängerquerträger energieabsorbierende Elemente oder energieabsorbierende Strukturen integriert, die dazu dienen, die bei einem Zusammenprall mit einem Fußgänger im Bereich des Beinabschnitts auftretende Stoßenergie soweit wie möglich zu absorbieren und damit das Verletzungsrisiko für den Fußgänger zu minimieren.

Häufig wird heute beim Fußgängerschutz im Bereich des Beinaufschlags zwischen Stoßfänger und Biegeträger ein Kunststoff-Polymerschaum als energieabsorbierendes Element eingesetzt, mit dem der Zwischenraum zwischen Biegeträger und Stoßfänger entweder direkt ausgeschäumt wird oder der Schaum wird dort in Form von Schaumkeilen oder Schaumblöcken eingelagert.

So beschreibt die DE 100 42 560 B4 eine Tragstruktur eines Kraftfahrzeugs mit einem Frontend, das' zweischalig ausgebildet ist, mit einem äußeren bei relativ wenig Krafteinwirkung verformbaren Frontendschalenteil (Stoßfänger) und einem inneren relativ steifen Frontendschalenteil (Stoßfängerquerträger), wobei zwischen dem Stoßfängerquerträger und dem Stoßfänger ein Deformationsformteil angeordnet ist, das eine Schaumstruktur aufweisen kann.

In der EP 1 577 168 A2 werden Stoßfänger als energieabsorbierende Bauteile beschrieben, die als blasgeformte Hohlkörper, die eine Schaumstofffüllung allseitig umschließen, ausgebildet sind.

Die Verwendung von Schaum als energieabsorbierendes Mittel hat den Vorteil, dass der Schaum leicht ist und kostengünstig eingesetzt werden kann, allerdings benötigt der Schaum relativ viel Bauraum und hat den zusätzlichen Nachteil, dass er nicht zu 100% reversibel ist, was bedeutet, dass das energieabsorbierende Mittel nach jedem Zusammenstoß an Wirkungsgrad verliert.

Alternativ wurden daher auch andere energieabsorbierende Systeme erprobt. So wird in der DE 10 2005 020 730 A1 ein Stoßfängersystem für Kraftfahrzeuge beschrieben, bei dem zwischen dem Stoßfängerquerträger und dem Stoßfänger Deformationselemente in Form von Hohlprofilabschnitten zur Energieabsorption angeordnet sind. Die DE 198 61 026 A1 beschreibt Energieabsorber für Stoßfänger von Kraftfahrzeugen, die zwischen Stoßfänger und Stoßfängerquerträger angeordnet sind, wobei die Energieabsorber Versteifungselemente enthalten, die von einer an dem Stoßfängerquerträger befestigbaren rückseitigen Haltestruktur wegweisende freistehende Vorderseiten (Rippen) aufweisen und sich unabhängig voneinander unter Energieaufnahme verformen können. Der Nachteil dieser beiden oben genannten Systeme zur Energieabsorption für den Fußgängerbeinschutz besteht darin, dass sich bei einem Zusammenprall mit einem Fußgänger die energieabsorbierenden Elemente irreversibel verformen, sodass auch bei kleineren Unfällen eine anschließende Reparatur unumgänglich ist. Darüber hinaus benötigen diese energieabsorbierenden Strukturen ebenfalls relativ viel Bauraum.

Aus der DE 4 401 874 C1 ist ein zwischen einer Stoßfängerhülle und einen Stoßfängerquerträger eines Kraftfahrzeuges einlegbares Dämpfungselement bekannt, das über eine aus zwei Federschenkeln und einem die Federschenkel verbindenden Steg gebildete Rippenstruktur aus einer sich in Längsrichtung des Stoßfängerträgers erstreckenden Längsrippe sowie über eine Anzahl von rechtwinklig zu der Längsrippe ausgerichteten Querrippen verfügt. Diese gitterartige Rippenstruktur verfügt über eine insbesondere bei hohen Kollisionsgeschwindigkeiten elastische Verformbarkeit, allerdings ist die Energieaufnahme bei Kollisionen mit verhältnismäßig geringen Geschwindigkeiten nicht sehr groß und die Struktur verhält sich relativ starr, sodass diese Anordnung als Fußgängerschutz nicht geeignet ist.

Es besteht somit weiterhin das Problem, eine energieabsorbierende Stoßfängeranordnung zur Verfügung zu stellen, deren energieabsorbierenden Elemente für den Schutz im Beinbereich ausgelegt sind und dabei in der Lage sind, genügend Energie abzubauen, und gleichzeitig vollständig reversibel sind, sodass insbesondere bei Zusammenstößen mit geringerer Geschwindigkeit anschließend keine Reparaturmaßnahmen erforderlich sind.

Gelöst wird das Problem durch eine Stoßfängeranordnung mit den Merkmalen des Anspruchs 1. Vorteilhafte Weiterentwicklungen und Ausgestaltungen der Erfindung sind in den Unteransprüchen wiedergegeben.

Das Konzept der vorliegenden Erfindung basiert darauf, ein Federelement als Energieabsorber für den Beinimpact einzusetzen. Dazu muss das Federelement einige Anforderungen erfüllen. So müssen die gesetzlich geforderten Grenzwerte für den Fußgängerschutz-Beinaufschlag erfüllt werden, der für den Energieabsorber erforderliche Bauraum soll auf ein Minimum reduziert werden und nicht zuletzt soll ein reversibles System aufgebaut werden, um auf diese Weise Servicekosten bei Bagatellschäden zu minimieren oder ganz zu vermeiden.

Grundvoraussetzung für die Einsetzbarkeit eines Absorberelements als Fußgängerschutz im Beinbereich ist, dass die gesetzlichen Anforderungen erfüllt und die entsprechenden Grenzwerte eingehalten werden. So sieht beispielsweise die technische Prüfvorschrift einer aktuellen Gesetzesvorlage für den Zulassungstest von Kraftfahrzeugen vor, dass bei einer Aufprallgeschwindigkeit von 40 km/h im Bereich des Unterteils des Beinform-Schlagkörpers gegen den Stoßfänger der größte dynamische Kniebeugewinkel höchstens 19°, die größte dynamische Kniescherverschiebung 6 mm und die am oberen Ende des Schienbeins gemessene Beschleunigung höchstens 170 g betragen darf. Diese Vorgaben müssen mit entsprechenden Energieabsorptionsmaßnahmen bei der Stoßfängeranordnung erfüllt werden.

Daneben spielen jedoch auch die beiden anderen oben genannten Faktoren eine wichtige Rolle. So ist es für den Konstrukteur eines Fahrzeuges enorm wichtig, Bauraum einzusparen und zu reduzieren, da aufgrund der hohen gesetzlichen Anforderungen im Bezug auf Insassenschutz und Sicherheit sowie der hohen Ausstattungserwartungen der Endverbraucher die Bauräume am Frontend eines Kraftfahrzeuges immer knapper werden. Um Überhangslängen eines Fahrzeuges zu vermeiden, Designvorgaben einzuhalten und dabei auch den Verbrauch, der direkt von der Länge des Fahrzeuges bzw. dem Gewicht des Fahrzeugs abhängt, in Grenzen zu halten, ohne dabei auf Funktionalität und Qualität verzichten zu müssen, sind die Konstrukteure gezwungen, zusätzlichen Bauraum durch technische Lösungen zu gewinnen.

Es wurde nun gefunden, dass durch die Einlagerung von U-förmigen Federelementen als Absorberelement im Bereich der Stoßfängeranordnung bis zu ca. 20 % Bauraum für das energieabsorbierende Element eingespart werden kann, ohne dass dadurch die gesetzlich zulässigen Grenzwerte für den Fußgängerschutz überschritten werden. Dabei werden zwar nur einige Millimeter Bauraum gewonnen, die jedoch angesichts der Bauraumknappheit in diesem Bereich einen enormen technischen Fortschritt bedeuten. Die Realisierung dieses Fortschritts gelingt mit einem U-förmigen Federelement, das zwischen Stoßfängerquerträger und Stoßfänger integriert wird und das sich beim Aufprall des Fußgängers bzw. beim Impact am Stoßfängerquerträger abstützt.

Der U-förmige Querschnitt des Federelements verformt sich beim Beinimpact derart, dass das Bein quasi über das Federelement abrollt. Dabei wird über die Federkennlinie Aufprallenergie abgebaut, wobei die Federkennlinie so ausgelegt ist, dass das Material nicht über seine Streckgrenze beansprucht wird und nur eine elastische Verformung stattfindet, so dass das Federelement nach dem Aufprall vollkommen reversibel wieder seine Ausgangsform einnimmt.

Vorausgesetzt, dass der Stoßfänger selber eine ausreichende Elastizität aufweist, kann auf diese Weise erreicht werden, dass kleinere Bagatellunfälle bei niedriger bis mittlerer Geschwindigkeit ohne große Schäden am Fahrzeug (und am Fußgänger) verlaufen.

Durch die gezielte Verformung beim Beinaufprall passt sich das Federelement relativ genau dem Abrollverhalten des Beines an und wirkt diesem nicht entgegen. Die Federkennlinie wird so eingestellt, dass die Streckgrenze der Feder nicht überschritten wird, wobei zusätzliche Hilfsmittel eingesetzt werden können, die verhindern, dass sich das Federelement plastisch verformt. Derartige Hilfsmittel können natürliche Anschläge sein, die das Zusammendrücken der Feder begrenzen, oder auch sonstige konstruktive Hilfsmittel, wie z.B. der Einbau von Rippen oder Querschnittsveränderungen im Bereich der Feder selber.

Das Federelement besteht bevorzugt aus einem Kunststoff (Elastomer), dessen elastisches Verhalten durch den Einbau von Glasfasern, Gewebe, Metalleinlegern oder unidirektionalen Fasersträngen verbessert werden kann. So werden als Federmaterial bevorzugt thermoplastische Elastomere eingesetzt, die eine hohe Bruchdehnung besitzen und deren elastische Eigenschaften durch die Wahl entsprechender Ausgangsverbindungen sowie durch zusätzliche Zuschlagmittel oder Verstärkungen für den jeweiligen Einsatz zweckoptimiert werden können. Neben den guten elastischen Eigenschaften und den vielfältigen Möglichkeiten der Einstellung der Absorptionskraft ist als zusätzlicher Vorteil dieser Kunststofffederelemente gegenüber anderen Materialien, wie z.B. Metall, auch ihr geringes Gewicht hervorzuheben.

Bevorzugte Kunststoffe für den Einsatz als energieabsorbierende Federelemente sind Polypropylen (PP), Polyamid (PA) und Ethylen-Propylen-Dien-Monomere (EPDM). Häufig werden auch Blockpolymere oder auch Elastomerlegierungen eingesetzt. Als Verstärkungsmaterialien kommen unidirektionale Glasfaserstränge, Gewebe und auch andere Fasern in Frage. Eine besonders bevorzugte Ausführungsform sieht vor, als thermoplastisches Elastomer ein Copolymerisat aus Polypropylen und Ethylen-Propylen-Dien-Monomer (PP-EPDM) einzusetzen.

Die Herstellung der Federelemente aus Kunststoff erfolgt üblicherweise über Spritzgießen oder durch Pressformen der Ausgangsmaterialen.

In besonderen Anwendungsfällen ist es auch denkbar, konventionelle Federelemente aus Metall einzusetzen, die sich durch eine härtere Federkennlinie auszeichnen.

Prinzipiell kann die Befestigung des Federelementes sowohl am Biegeträger als auch am Stoßfänger erfolgen, wobei es jedoch vorteilhaft ist, wenn der Biegeträger als Halterung ausgewählt wird, da dieser gleichzeitig auch als Anschlag für die Feder dient.

Das energieabsorbierende Federelement ist erfindungsgemäß über die gesamte Fahrzeugbreite zwischen Stoßfänger und Querträger angeordnet. Dabei kann das energieabsorbierende Element einstückig eingelagert werden oder alternativ in Form von mehreren Einzelstücken, die kumulierend zwischen Stoßfängerquerträger und Stoßfänger integriert werden. Die Aufteilung in mehrere Einzelstücke hat den Vorteil, dass die Montage des energieabsorbierenden Elements erleichtert wird und eventuell bei höheren Kollisionsgeschwindigkeiten anfallende Reparaturkosten reduziert werden.

Geprägt wird das Verhalten des Federelements im Falle eines Aufpralls durch die sogenannte Federkennlinie, die auf unterschiedliche Weise beeinflusst werden kann. So kann bei einem U-förmig aufgebauten homogenen Federelement die Federkennlinie durch Einlagerung von Gewebematerialien oder Fasersträngen bestimmt werden. Weitere Möglichkeiten zur Einstellung der Federkennlinie beruhen auf Querschnittsänderungen oder Einlagerung von Rippen im U-förmigen Federelement. Die Federkennlinie kann beim erfindungsgemäßen Federelement so eingestellt werden, dass die Aufprallenergie die beiden Schenkel der Feder zumindest stellenweise vollständig zusammendrückt. Durch Anschläge oder andere Maßnahmen im Bereich der Feder oder des Stoßfängerquerträgers kann eine plastische Verformung der Feder beim Impact verhindert werden. Der Stoßfänger selber ist vorteilhaft als ein bei relativ wenig Krafteinwirkung verformbares Kunststoffformteil ausgebildet, das eine hohe Eigenelastizität aufweist, so dass der Stoßfänger mitsamt des Federelementes nach einem Aufprall mit geringer Geschwindigkeit reversibel und unversehrt wieder in seine Ausgangsposition zurückkehrt.

Im Folgenden wird die Erfindung anhand von Abbildungen ausführlich erläutert. Dabei zeigen die
- Fig. 1 bis 3: Querschnitte unterschiedlicher U-förmiger Pro- file für Federelemente,
- Fig. 4 bis 7: perspektivische Darstellungen unterschiedlicher Federelemente,
- Fig. 8: einen Querschnitt eines U-förmigen Federelemen- tes vor einem Impact,
- Fig. 9: einen Querschnitt des Federelementes aus der Figur 8 im Falle des Beinaufpralls,
- Fig. 10: eine perspektivische Darstellung eines Feder- elementes und
- Fig. 11: einen Längsschnitt eines Frontbereichs eines Kraftfahrzeugs.

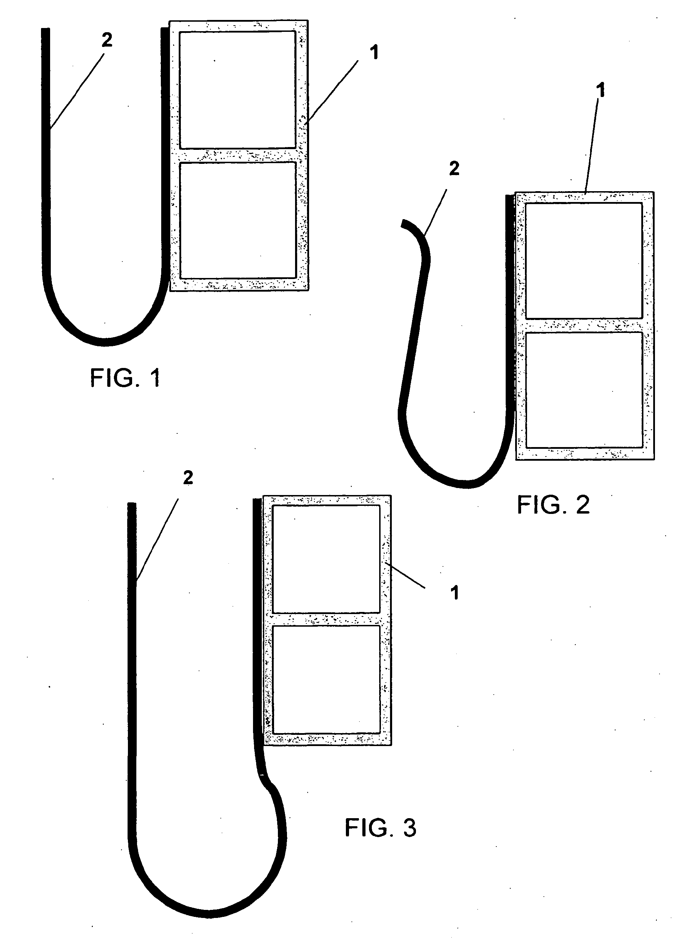

Die Figuren 1 bis 3 zeigen im Querschnitt energieabsorbierende Federelemente 2 mit unterschiedlich ausgeführten U-Profilen, die direkt am Stoßfängerquerträger 1 angeordnet sind.

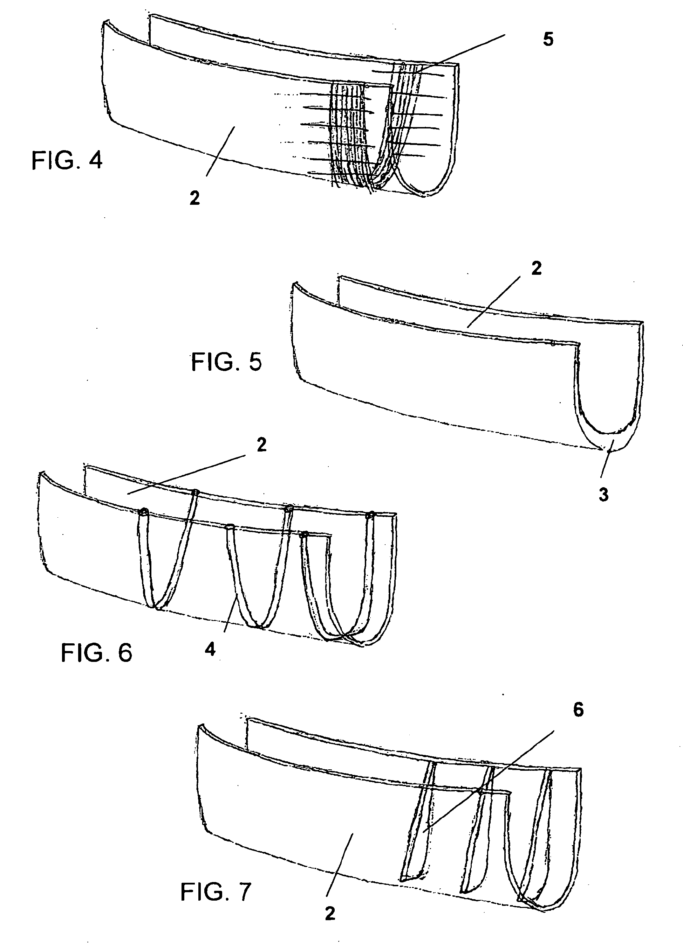

Die Figur 4 zeigt ein Federelement 2 in der Perspektive, dessen Federkennlinie durch die Einlagerungen von Gewebeeinlagen 5 bestimmt ist.

Figur 5 zeigt ein Federelement 2 in der Perspektive, dessen Federkennlinie durch eine Querschnittsveränderung 3 im unteren Bereich der U-förmigen Rinne geprägt ist.

Die Figur 6 zeigt ein Federelement 2, das als homogene U-förmige Rinne ausgebildet ist, wobei die Federkennlinie durch die Einlagerung von unidirektionalen Glasfasersträngen bestimmt wird.

Die Figur 7 zeigt ebenfalls ein rinnenförmiges Federelement 2, dessen Federkennlinie durch die Einlagerungen von Verstärkungsrippen 6 geprägt ist.

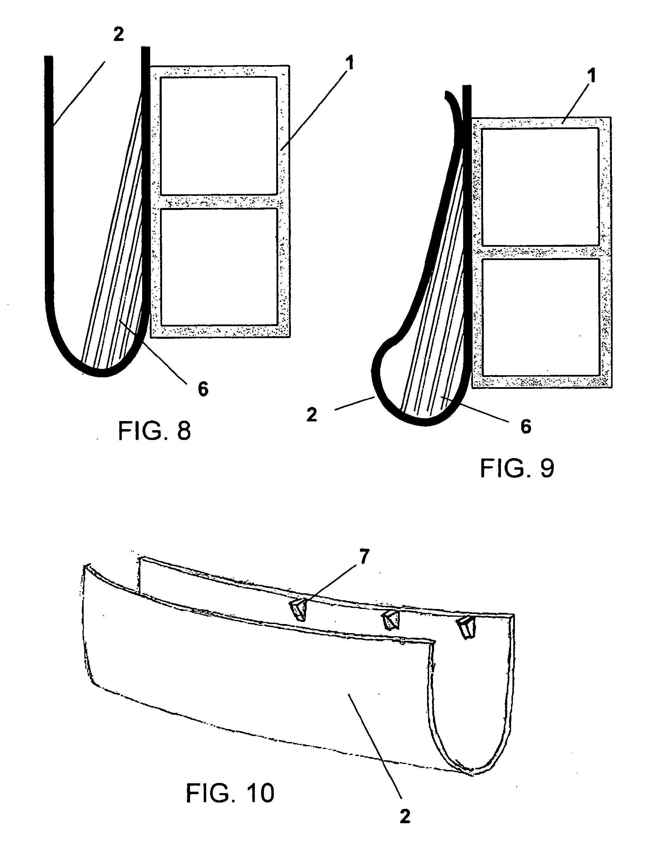

Die Figur 8 zeigt im Querschnitt ein U-förmiges Federelement 2, das direkt am Stoßfängerquerträger 1 angeordnet ist, mit einer seitlichen Verstärkungsrippe 6 ohne äußeren Einfluss (vor dem Impact), während die Figur 9 das Federelement 2 aus Figur 8 bei einem Beinaufprall zeigt. Aus dieser Abbildung wird deutlich, dass keine Blockbildung wie beispielsweise bei einem Schaumstoff stattfindet, sondern die Feder beim Aufprall nahezu vollständig bis zum Querträger verformt wird, sodass bei gleichbleibender Aufprallenergie für die Energieabsorption im Vergleich zum Stand der Technik weniger Platz benötigt und somit zusätzlicher Bauraum gewonnen wird.

Die Figur 10 zeigt eine perspektivische Ansicht eines U-förmigen rinnenartigen Federelements 2, das an seinem zum Stoßfängerquerträger 1 weisenden Schenkel Anschläge 7 aufweist, die eine plastische Verformung des Federelementes 2 verhindern sollen.

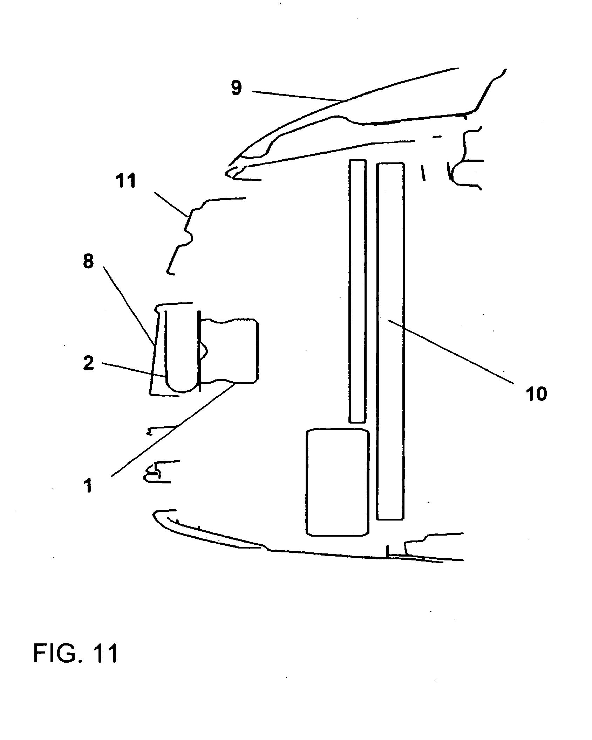

Die Figur 11 zeigt im Längsschnitt den Frontbereich eines Kraftfahrzeugs. In dieser Darstellung ist die Anordnung des Federelementes 2 im Zusammenspiel mit den sonstigen Bauteilen im Frontbereich, wie z.B. Kühler 10, Kühlergrill 11 und Motorhaube 9, zu erkennen, wobei das Federelement 2 zwischen Stoßfänger 8 und Stoßfängerquerträger 1 direkt am Stoßfängerquerträger 1 selber angeordnet ist.

### Bezugszeichenliste

- 1: Stoßfängerquerträger
- 2: Federelement
- 3: Querschnittsänderung
- 4: unidirektionale Glasfaserstränge
- 5: Gewebeeinlagen
- 6: Verstärkungsrippen
- 7: Anschläge
- 8: Stoßfänger
- 9: Motorhaube
- 10: Kühler

## Patentansprüche

1. Stoßfängeranordnung für Kraftfahrzeuge mit mindestens einem in einem Hohlraum zwischen einem bei relativ wenig Krafteinwirkung verformbaren Stoßfänger und einem relativ steifen Stoßfängerquerträger (1) angeordneten energieabsorbierenden Element, wobei das mindestens eine energieabsorbierende Element ein Federelement (2) ist, wobei das Federelement (2) als eine quer zur Fahrtrichtung angeordnete U-förmige Rinne ausgebildet ist, **dadurch gekennzeichnet, dass** das Federelement (2) bei einem Beinaufprall verformbar und dem Abrollverfahren des Beines anpassbar ist.

2. Stoßfängeranordnung nach Anspruch 1,
**dadurch gekennzeichnet, dass**
das Federelement (2) aus einem thermoplastischen Kunststoff besteht.

3. Stoßfängeranordnung nach Anspruch 2,
**dadurch gekennzeichnet, dass**
der thermoplastische Kunststoff mit einem Gewebe, einem Blecheinleger, unidirektionalen Fasersträngen und/oder Glas- oder Kohlefasern verstärkt ist.

4. Stoßfängeranordnung nach Anspruch 2 oder 3,
**dadurch gekennzeichnet, dass**
der thermoplastische Kunststoff ein thermoplastisches Elastomer auf Basis eines Co-Polymers aus Polypropylen und Ethylen-Propylen-Dien-Monomer (PP/EPDM) ist.

5. Stoßfängeranordnung nach einem der Ansprüche 2 bis 4,
**dadurch gekennzeichnet, dass**
das Federelement (2) über Spritzgießen oder Verpressen von thermoplastischen Kunststoffen hergestellt ist.

6. Stoßfängeranordnung nach einem der Ansprüche 1 bis 5,
**dadurch gekennzeichnet, dass**
das Federelement (2) Mittel zur Festlegung der Federkennlinie aufweist.

7. Stoßfängeranordnung nach Anspruch 6,
**dadurch gekennzeichnet, dass**
die Mittel zur Festlegung der Federkennlinie Querschnittsänderungen (3), unidirektionale Faserstränge (4), Gewebeeinlagen (5), Blecheinleger und rippenförmige Verstärkungen (6) umfassen.

8. Stoßfängeranordnung nach Anspruch 1,
**dadurch gekennzeichnet, dass**
das Federelement (2) aus Metall besteht.

9. Stoßfängeranordnung nach einem der Ansprüche 1 bis 8,
**dadurch gekennzeichnet, dass**
die Stoßfängeranordnung Mittel zur Verhinderung einer plastischen Verformung des Federelementes (2) umfasst.

10. Stoßfängeranordnung nach Anspruch 9,
**dadurch gekennzeichnet, dass**
die Mittel zur Verhinderung einer plastischen Verformung am Stoßfängerquerträger (1) oder am Federelement (2) angeordnete Anschläge (7) umfassen.

11. Stoßfängeranordnung nach einem der Ansprüche 1 bis 10,
**dadurch gekennzeichnet, dass** das Federelement (2) für einen Aufprall mit geringer Geschwindigkeit reversibel ausgelegt ist.

## Claims

1. A bumper arrangement for motor vehicles with at least one energy-absorbing element arranged in a cavity between a bumper deformable with relatively little application of force and a relatively stiff bumper cross member (1), wherein the at least one energy-absorbing element is a spring element (2), wherein the spring element (2) is designed in the form of a U-shaped channel arranged transversely to the direction of travel, **characterized in that** the spring element (2) is deformable in the event of a leg impact and is capable of being adapted to the rolling action of the leg.

2. A bumper arrangement according to claim 1, **characterized in that** the spring element (2) consists of a thermoplastic plastics material.

3. A bumper arrangement according to claim 2, **characterized in that** the thermoplastic plastics material is reinforced with a fabric, a sheet-metal insert, unidirectional fibre strands and/or glass fibres or carbon fibres.

4. A bumper arrangement according to claim 2 or 3, **characterized in that** the thermoplastic plastics material is a thermoplastic elastomer on the basis of a co-polymer of polypropylene and ethylene propylene diene monomer (PP/EPDM).

5. A bumper arrangement according to any one of claims 2 to 4, **characterized in that** the spring element (2) is produced from thermoplastic plastics materials by injection-moulding or pressing.

6. A bumper arrangement according to any one of claims 1 to 5, **characterized in that** the spring element (2) has means for fixing the spring characteristic.

7. A bumper arrangement according to claim 6, **characterized in that** the means for fixing the spring characteristic comprise changes in the cross-section (3), unidirectional fibre strands (4), fabric inlays (5), sheet-metal inserts and rib-shaped reinforcements (6).

8. A bumper arrangement according to claim 1, **characterized in that** the spring element (2) consists of metal.

9. A bumper arrangement according to any one of claims 1 to 8, **characterized in that** the bumper arrangement comprises means for preventing a plastic deformation of the spring element (2).

10. A bumper arrangement according to claim 9, **characterized in that** the means for preventing a plastic deformation comprise stops (7) arranged on the bumper cross member (1) or on the spring element (2).

11. A bumper arrangement according to any one of claims 1 to 10, **characterized in that** the spring element (2) is designed so as to be reversible for an impact at low speed.

## Revendications

1. Dispositif de pare-chocs de véhicule automobile comportant au moins un élément absorbant l'énergie installé dans l'espace creux entre un pare-chocs déformable sous l'effet d'une force relativement faible et d'un support transversal de pare-chocs (1) relativement rigide,
- au moins un élément absorbant l'énergie étant un élément de ressort (2),
- l'élément de ressort (2) est réalisé sous la forme d'une goulotte à section en U installée transversalement à la direction de déplacement,
dispositif **caractérisé en ce que**
l'élément de ressort (2) se déforme en cas de choc contre une jambe et s'adapte au processus de déroulement de la jambe.

2. Dispositif de pare-chocs selon la revendication 1,
**caractérisé en ce que**
l'élément de ressort (2) est en une matière thermoplastique.

3. Dispositif de pare-chocs selon la revendication 2,
**caractérisé en ce que**
la matière thermoplastique est renforcée par un tissu, par un insert en tôle, par des cordons de fibres unidirectionnelles et/ou par des fibres de verre ou de carbone.

4. Dispositif de pare-chocs selon la revendication 2 ou 3,
**caractérisé en ce que**
la matière thermoplastique est un élastomère thermoplastique à base d'un copolymère de polypropylène et du monomère diène-éthylène-propylène (PP/EPDM).

5. Dispositif de pare-chocs selon l'une des revendications 2 à 4,
**caractérisé en ce que**
l'élément de ressort (2) est fabriqué par injection ou par travail à la presse de matières thermoplastiques.

6. Dispositif de pare-chocs selon l'une des revendications 1 à 5,
**caractérisé en ce que**
l'élément de ressort (2) comporte des moyens pour fixer la courbe caractéristique de ressort.

7. Dispositif de pare-chocs selon la revendication 6,
**caractérisé en ce que**
les moyens de fixation de la courbe caractéristique de ressort, comprennent des variations de section (3), des cordons de fibres (4) unidirectionnelles, des inserts de tissu (5), des inserts en tôle et des renforcements (6) en forme de nervures.

8. Dispositif de pare-chocs selon la revendication 1,
**caractérisé en ce que**
l'élément de ressort (2) est en métal.

9. Dispositif de pare-chocs selon l'une des revendications 1 à 8,
**caractérisé en ce que**
le dispositif de pare-chocs comporte des moyens pour réduire la déformation plastique de l'élément de ressort (2).

10. Dispositif de pare-chocs selon la revendication 9,
**caractérisé en ce que**
les moyens pour éviter une déformation plastique comprennent des butées (7) prévues sur la traverse d'absorption de chocs (1) ou un élément à ressort (2).

11. Dispositif de pare-chocs selon l'une des revendications 1 à 10,
**caractérisé en ce que**
l'élément de ressort (2) est conçu pour être réversible vis-à-vis d'un choc à faible vitesse.
